Europäisches Patentamt

European Patent Office

Office européen des brevets

(19)

(11) Publication number: **0 292 060 B1**

# EUROPEAN PATENT SPECIFICATION

(12)

(45) Date of publication of patent specification: **11.12.91**

(51) Int. Cl.⁵: **F17C 13/02, G01F 23/38**

(21) Application number: **88200962.4**

(22) Date of filing: **13.05.88**

(54) Level indicator with front reading.

(30) Priority: **15.05.87 IT 2054087**

(43) Date of publication of application:
**23.11.88 Bulletin 88/47**

(45) Publication of the grant of the patent:
**11.12.91 Bulletin 91/50**

(84) Designated Contracting States:
**AT BE CH DE ES FR GB GR IT LI LU NL SE**

(56) References cited:
**DE-B- 1 186 087**
**DE-C- 326 582**
**US-A- 2 371 511**
**US-A- 3 212 333**

(73) Proprietor: **Pirovano, Angelo**
**Via Monte Bianco, 10**
**I-20011 Corbetta Milano(IT)**

(72) Inventor: **Pirovano, Angelo**
**Via Monte Bianco, 10**
**I-20011 Corbetta Milano(IT)**

(74) Representative: **Riccardi, Sergio**
**Riccardi & Co. Via Macedonio Melloni, 32**
**I-20129 Milano(IT)**

Rank Xerox (UK) Business Services

## Description

The invention relates to a level indicator which indicates the percentage volume of liquefied gas contained in the relative tank and presents considerable advantages compared to the conventional types of such level indicators, is particular greatly facilitating the taking of readings.

It is well known that the use of tanks which have a higher capacity (generally from 500 to 5,000 litres or more) instead of the traditional liquefied gas cylinders is becoming increasingly common because the user has available a much larger reserve of liquefied gas and therefore has to replenish the stock at much longer intervals.

These tanks for liquefied gas are provided with a level indicator which is normally constituted by a rod and a float which by feedback transmission actuates the pointer of the indicator, which rotates inside a dial housed in a case, connected to the extremity of the transmission rod and attached to the outside of the tank in a position which is suitable for taking a reading.

However, since the said tanks for liquefied gas are installed in positions to which access is very difficult and are very subject to dirt and deterioration, whether located in a cellar, underground or in the open, the aforesaid case which houses the level indicator is normally protected by a plastic cover which is simply pressed down onto the case and has to be removed every time a reading of the level of the gas in the tank is taken, or the case is supplied with a cover which can be opened but which is fixed, and preferably hinged, to the body of the case. In some types of embodiments the said cover is provided with a window or lens so that the user can read the indicator without having to open the cover.

In spite of this, the disadvantage of all these types of level indicator is that they can only be read close to and, since the case housing the indicator is very often located at some considerable height, the user has to use a stool, steps or some other means of raising himself to the same level in order to take a reading. Thus the whole process becomes quite complicated, especially if, at the same time, the user has to hold an electric torch, a notebook or other things.

US-A-3 212 333 and US-A-2 371 511 disclose a level indicator for liquefied gas, actuated by a rotating rod connected to a float, comprising a body fixed to the tank and provided with an upper window for reading the upper dial, as well as a drum supported in such a way as to be able to rotate inside the body and which is caused to rotate by magnets arranged respectively at the upper extremity of the rotating rod and on the base of the drum, the indicator pointer being fixed at the top of the rotating drum. However, a rotating pointer is a very delicate instrument especially in the severe working environment of the level indicator, and the provision of another pointer for reading a lateral graduated scale would be very complex or even impossible.

DE-C-326582 discloses a level indicator provided with a graduated scale of the level of a tank on the side surface of a rotating drum which can be read through a window cut in the side of the body of the indicator, but this is a coiled spring actuated device which does not suggest and cannot be provided with a second scale on the top of the indicator case.

Therefore in the prior art the problem of having two graduated rotating scales, one to be read from above and the other from the front side with two fixed reference indexes, was neither recognized nor solved.

The present invention solves this problem by means of a level indicator with the features recited in the characterizing part of Claim 1.

The invention as claimed eliminates all these disadvantages, making it possible to take a reading of the indicator with the greatest simplicity, without the need for climbing and even at quite a considerable distance from the indicator since not only is reading made easier by the lens inserted in the window, but a spyglass or binoculars can be used to take a reading from a distance.

The invention as claimed solves the problem by the use of a rotating drum which has a dial on the top and, at the side, a repetition of the scale given on the dial, so that a frontal reading can also be taken through the window provided without the need to refer to the dial located on the top of the case which houses the indicator.

These and other characteristics, together with the advantages and the scope of the indicator according to the invention of this claim, will be made even clearer and more evident in the following detailed description of certain preferential embodiments, given purely as a non-limiting example of the scope of this invention and referring to the attached drawings, in which:

Figure 1 is a perspective cross-section view of the indicator in accordance with the invention; and

Figures 2A, 2B, 2C are respectively perspective cross-section views from the front and from above of one embodiment of the indicator in question, specially designed for application in the housing cases of existing level indicators.

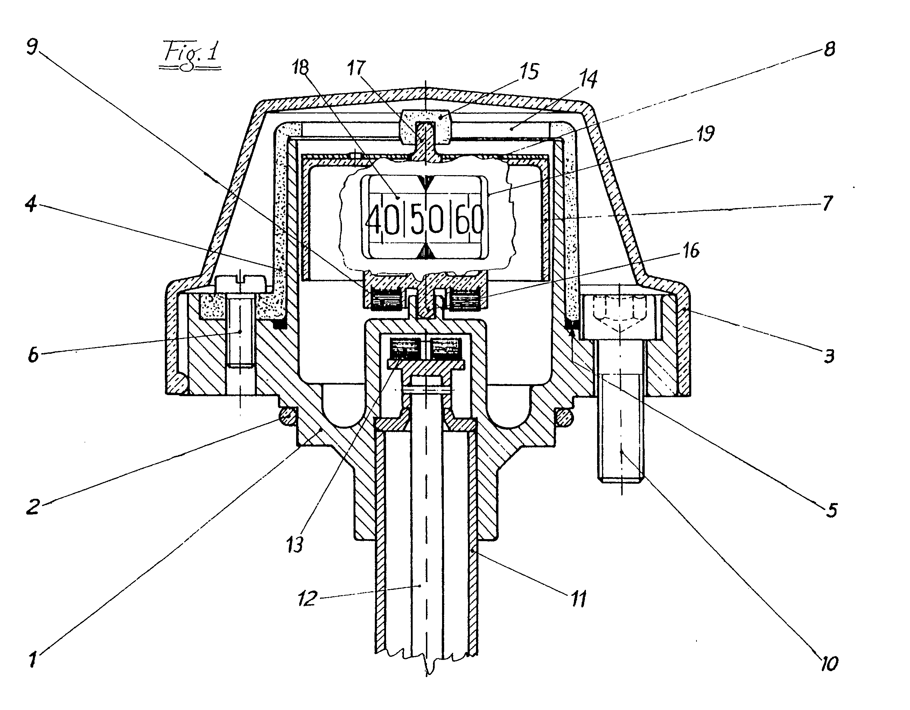

Referring now to Figure 1 of the attached drawings, the level indicator of the invention as claimed consists of a body 1 inserted at the upper extremity of a tube 11 inside which a rod 12 rotates freely, said rod by means of an appropriate transmission rotating in proportion to the movement of the float which follows the level of the liquefied gas and being provided at its upper extremity with magnets 13 which, as will be explained later, cause the dial of the indicator to rotate.

The body 1 is mounted on the tank (not shown) with the interposition of the anchor ring 2 by means of the hexagon headed screws 10 and is closed at the top by the housing 4 which has an upper window 14 and is fixed to the body 1 by means of locking screws 6 with an interposed gasket 5.

The indicator is covered by a protective cover 3 which is pressure-applied and which must be removed every time a reading has to be taken. It could also be applied in a different way, for example, hinged to the body 1.

The internal chamber which is delimited by the body 1 and the housing 4 contains the rotating drum 7, which has the dial 8 mounted on its upper surface, so that it can normally be read through the upper window 14. The drum 7 is supported in such a way that it can rotate by means of pintles 16 and 17, at the bottom inside a seat in the slot or central spindle of the body 1 and at the top in a seat 15 provided at the centre of the window 14, in which a special glass or lens is fitted.

Magnets 9 are arranged at the bottom of the drum 7 and these are caused to rotate by the corresponding magnets 13 located at the upper extremity of the rod 12, and their degree of rotation corresponds to that of the rod 12 and, therefore, to the displacement of the float, thus causing the dial 8 to rotate and aligning the figure which indicates the level of liquefied gas contained in the tank with the reference index.

The scale of levels reproduced on the dial 8 is duplicated on the side surface of the drum 7, as represented by the reference number 18, and can be seen from the outside through a transparent window, provided with glass or a lens, which has been cut out of the front side surface of the housing 4 and/or the body 1, and is provided with a reference index for reading the value of the level.

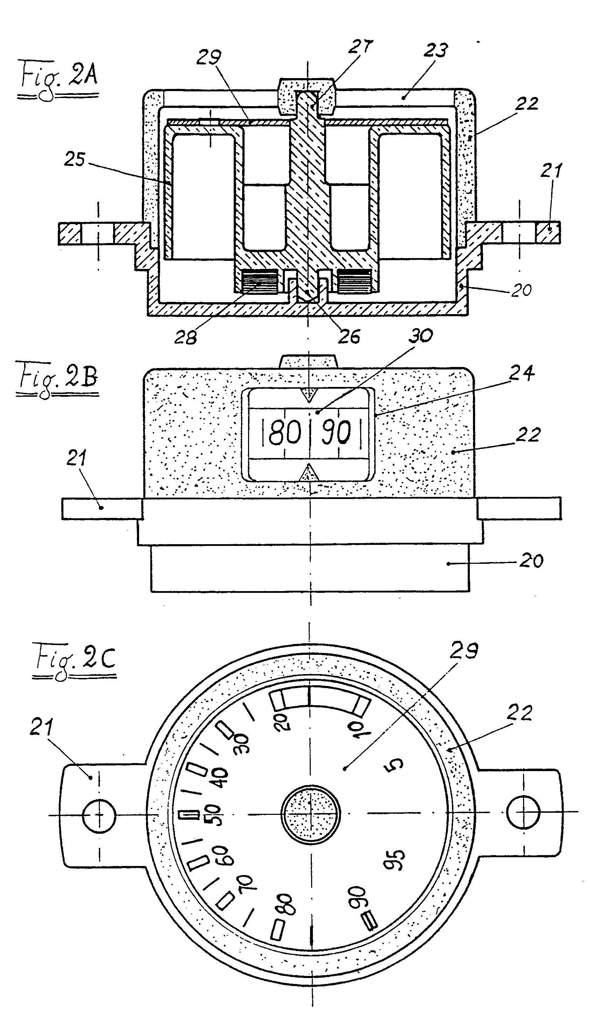

The embodiment described up until now refers to an indicator of a new construction to be integrally applied to the tanks but the system of the invention of this claim can also be applied to indicators which already exist, merely by replacing the indicator unit contained in the housing actually in use with an indicator which is basically similar to the one already described and which will now be described in greater detail by reference to Figures 2A, 2B and 2C.

It is known that the housing cases existing today, whether of the type with a hinged cover or the type with a press-on protective cover, have a shaped seat into which the indicator unit, together with the dial and the relative pointer, is inserted and fixed.

In accordance with the second embodiment shown in Figures 2A, 2B and 2C, an indicator functioning on the principle of the invention of this claim can be inserted and fixed in the seat of the housing case.

It comprises a body 20 with side pieces 21 for fixing to the housing case (not shown) by means of screws (also not shown). The body 20 is closed by a cover 22 with an upper window 23 and a side or front window 24. Inside the chamber formed in this way there is another drum 25, which works on the same principle as the drum 7 of the first embodiment, thus it is supported by the body 20 and the case 22 respectively by freely rotating pintles 26 and 27 and rotates because of the action of the magnets 28 in the manner previously described. The dial 29 is fixed to the drum 25 and its scale is repeated on the side face 30 of the drum 25 and thus a reading can be taken through the transparent lenticular window 24 which has a reference index for reading the value.

Thus it is evident that, in all its embodiments, the level indicator according to the invention of this claim fully achieves all the set objectives and in particular permits the taking of side and front readings without having to climb or assume uncomfortable positions and even at a considerable distance.

## Claims

1. Level indicator for liquefied gas, actuated by a rotating rod (12) connected to a float, comprising a body (1) fixed to the tank and provided with an upper window (14) for reading an upper dial (8), a drum (7) supported in such a way as to be able to rotate inside the body (1) and which is caused to rotate by magnets (9,13) arranged respectively at the upper extremity of the rotating rod (12) and on the base of the drum (7), characterized in that the upper dial (8) is attached to the upper surface of the drum (7) and the drum (7) has on its side surface another graduated scale (18) of the level of the tank, to be read through a window (19) cut in the side or front surface of the body (1) of the indicator; that the upper (14) and/or side or front (19) windows are each provided with a lenticular glass to facilitate reading of the scale as well as a reference index for reading the value of the level; that the drum (7) is supported in such a way as to be able to rotate by two axial pintles, an upper (17) one and a lower (16) one, lodged in appropriate seats in the body (1) of the indicator; and that it is provided with a protective cover (3) which is applied or hinged to the body (1) of the indicator.

2. Level indicator according to claim 1, characterized in that the body (1) of the indicator has a shape which is suitable for insertion into the relevant seat already provided in the housing cases of existing pointer level indicators, in order to replace them.

3. Level indicator according to claim 1, characterized in that its container or case is constituted by a lower part or body (1) and an upper part or housing (4) which form an integral unit connected together by locking screws (6) with an interposed gasket (5).

4. Level indicator according to claim 3 characterized, in that the body (1) is fixed to the tank by means of hexagon headed screws (10) with an interposed anchor ring (2).

**Revendications**

1. Indicateur de niveau pour gaz liquéfié, actionné par une tige rotative (12) reliée à un flotteur, comprenant un corps (1) fixé au réservoir et pourvu d'une fenêtre supérieure (14) pour la lecture du cadran supérieur (8), un barillet (7) supporté de manière à pouvoir tourner à l'intérieur du corps (1) et dont la rotation est provoquée par des aimants (9, 13) disposés respectivement à l'extrémité supérieure de la tige rotative (12) et à la base du barillet (7), caractérisé en se que le cadran supérieur (8) est fixé à la face supérieure du barillet (7) et que le barillet (7) présente, sur sa face latérale, une autre échelle graduée (18) du niveau du réservoir, pouvant être lue à travers une fenêtre (19) découpée dans la face latérale ou frontale du corps (1) de l'indicateur, que les fenêtres supérieure (14) et/ou latérale ou frontale (19) sont pourvues chacune, d'un verre à lentille, afin de faciliter la lecture de l'échelle, ainsi que d'une aiguille de référence destinée à la lecture de la valeur du niveau, que le barillet (7) est supporté, de manière à pouvoir tourner, par deux pivots axiaux, l'un (17) supérieur et l'autre (16) inférieur, logés dans des sièges appropriés dans le corps (1) de l'indicateur, et qu'il est muni d'un couvercle de protection (3) qui est appliqué, ou articulé, sur le corps (1) de l'indicateur.

2. Indicateur de niveau suivant la revendication 1, caractérisé en ce que le corps (1) de l'indicateur présente une forme qui convient pour l'introduction dans le siège correspondant déjà prévu dans les coffrets d'indicateurs de niveau à aiguille existants, afin de les remplacer.

3. Indicateur de niveau suivant la revendication 1 caractérisé en ce que son conteneur ou coffret se compose d'une partie inférieure ou corps (1) et d'une partie supérieure ou boîtier (4) qui forment une unité intégrale assemblée par des vis de blocage (6), avec intercalage d'un joint (5).

4. Indicateur de niveau suivant la revendication 3, caractérisé en ce que le corps (1) est fixé au réservoir à l'aide de vis à tête hexagonale (10), avec intercalage d'une bague d'ancrage (2).

**Patentansprüche**

1. Füllstandsanzeiger für Flüssiggas, der durch eine sich drehende Stange (12) bewegt wird, die mit einem Schwimmer verbunden ist, wobei er einen Körper (1), der fest mit dem Tank verbunden ist und mit einem oberen Fenster (14) zum Ablesen einer oberen Rundskala (8) versehen ist, und eine Trommel (7) aufweist, die derart gelagert ist, um sich innerhalb des Körpers (1) drehen zu können, und die durch Magnete (9, 13) zum Drehen gebracht wird, die jeweils an dem oberen Ende der Drehstange (12) und auf der Grundfläche der Trommel (7) angeordnet sind, dadurch gekennzeichnet, daß die obere Drehskala (8) an der oberen Oberfläche der Trommel (7) angebracht ist und die Trommel (7) auf ihrer Seitenoberfläche eine weitere Meßskala (18) für den Füllstand des Tanks hat, um durch ein Fenster (19), das in die Seiten oder vordere Fläche des Körpers (1) des Anzeigers geschnitten ist, abgelesen zu werden; daß das obere (14) und/oder Seiten oder vordere (19) Fenster jedes mit einem linsenförmigen Glas zum Erleichtern des Ablesens der Skala als auch einer Hinweisanzeige zum Ablesen des Wertes des Füllstands versehen ist; daß die Trommel (7) derart gelagert ist, daß sie sich durch zwei senkrechte Drehzapfen, einem oberen (17) und einem unteren (16), die in geeigneten Sitzen im Körper (1) des Anzeigers angebracht sind, drehen kann; und daß er mit einer Schutzabdeckung (3) versehen ist, die am Körper (1) des Anzeigers angebracht oder drehbar gelagert ist.

2. Füllstandsanzeiger nach Anspruch 1, dadurch gekennzeichnet, daß der Körper (1) des Anzeigers eine Form hat, die geeignet ist zum Einsetzen in den schon in den Gehäusen existierender Füllstandsanzeiger vorgesehenen entsprechenden Sitz, um diese zu ersetzen.

3. Füllstandsanzeiger nach Anspruch 1, dadurch gekennzeichnet, daß sein Behälter oder seine Dose aus einem unteren Teil oder Körper (1) und einem oberen Teil oder Gehäuse (4) gebildet wird, die ein durch Klemmschrauben (6) mit einer dazwischengelegten Dichtung (5) miteinander verbundenes einheitliches Ganzes bilden.

4. Füllstandsanzeiger nach Anspruch 3, dadurch gekennzeichnet, daß der Körper (1) fest mit dem Tank durch Sechskantkopfschrauben (10) mit einer dazwischengelegten Kreiswulst (2) fest verbunden ist.

Fig. 1

EP 0 292 060 B1

_Fig. 2A_

_Fig. 2B_

_Fig. 2C_